# EUROPÄISCHE PATENTANMELDUNG

(11) **EP 0 969 585 A2**
(43) Veröffentlichungstag der Anmeldung: **05.01.2000**
(21) Anmeldenummer: 99109379.0
(22) Anmeldetag: 02.06.1999
(51) Int. Cl.: H02M 3/335

(54) **DC/DC Konverter**

(30) Priorität: 03.07.1998 DE 19829777
(71) Anmelder: ABB PATENT GmbH, 68309 Mannheim (DE)
(72) Erfinder: Vollmer, Ludwig, Ing. grad., 59609 Anröchte (DE); Schell, Andreas, Dipl.-Ing., 70329 Stuttgart (DE); Lorenz, Helmut, 72644 Oberboihingen (DE)
(74) Vertreter: Miller, Toivo

(57) **Zusammenfassung**

Die Erfindung bezieht sich auf einen DC/DC-Konverter, der abwechselnd in einer ersten Energieflußrichtung (A) als Hochsetzsteller und in einer zweiten Energieflußrichtung (B) als Tiefsetzsteller betreibbar ist. Eine Potentialtrennung zwischen der Niedervoltseite (N) und der Hochvoltseite (H) des Konverters ist mittels einer magnetischen Verbundeinheit (1) erreicht, die außer einer Transformatorfunktion auch eine Energiespeicherfunktion hat. Der Konverter arbeitet in beiden Energieflußrichtungen (A, B) als Gegentaktwandler. Der DC/DC-Konverter ist beispielsweise in Kraftfahrzeugen mit Brennstoffzellen-gespeistem Elektroantrieb einsetzbar.

## Beschreibung

Die Erfindung bezieht sich auf einen DC/DC-Konverter mit bidirektionalem Energiefluß.

Solche Konverter sind beispielsweise in der Kraftfahrzeugtechnik zur Energieübertragung zwischen einer Starterbatterie und einem Brennstoffzellensystem einsetzbar.

Im Fall eines brennstoffzellengespeisten Elektrofahrzeugantriebs kann es für den Startvorgang erforderlich sein, Hilfsenergie mit einer Gleichspannung von mehr als 200 V und einer Leistung von etwa 2 kW zur Verfügung zu stellen. Unter Verwendung eines Hochsetzstellers kann die benötigte Hilfsenergie während des Startvorgangs z.B. aus einer 12V-Starterbatterie entnommen werden. Eine anschließende Nachladung der Starterbatterie kann unter Einsatz eines Tiefsetzstellers mittels der von der Brennstoffzellenbatterie mit einer Gleichspannung von beispielsweise 250V lieferbaren elektrischen Energie erfolgen.

Die Verwendung sowohl eines Hochsetzstellers als auch zusätzlich eines Tiefsetzstellers in einer derartigen Anwendung bedeuten einen erheblichen Aufwand.

Wünschenswert ist daher ein DC/DC-Konverter, der in einer ersten Energieflußrichtung als Hochsetzsteller arbeitet und wechselweise in der umgekehrten Richtung als Tiefsetzsteller betreibbar ist. Dabei muß eine galvanische Entkopplung der mittels des DC/DC-Konverters zu verbindenden Stromkreise gegeben sein.

In manchen Anwendungsfällen, insbesondere in der Kraftfahrzeugtechnik werden auch DC/DC-Konverter benötigt, die nur als Tiefsetzsteller arbeiten, aber ebenfalls eine Potentialtrennung aufweisen. Sowohl solche unidirektionale DC/DC-Tiefsetzsteller, also auch der zuvor genannte bidirekte DC/DC-Konverter sollen besonders kompakt sowohl material- und kostensparend realisierbar sein.

Einen Ansatz zur Realisierung besonders kompakter Konverter liefert die DE 195 42 357 A1. Ihr sind eine magnetische Verbundenheit und einige Konverterschaltungen zu entnehmen. Mit Hilfe der magnetischen Verbundeinheit können Konverterschaltungen realisiert werden, bei denen sowohl die Funktion einer Energiespeicherdrossel mit Mittelanzapfung mit der Funktion eines potentialtrennenden Transformators in einem einzigen induktiven Bauelement kombiniert sind. In Zeichnungsfiguren 7, 8 und 8a der DE 195 42 357 A1 sind unterschiedliche Ausführungen der magnetischen Verbundeinheit angegeben.

In Figur 6 der DE 195 42 357 A1 ist eine AC/DC-Konverterschaltung angegeben, die als Hochsetzsteller arbeitet. Diese Schaltung kann zwar ohne weiteres durch Weglassen der eingangsseitigen Gleichrichterbrücke in einen DC/DC-Hochsetzsteller geändert werden, arbeitet jedoch nur in einer Energieflußrichtung.

Figur 11 der DE 195 42 357 A1 zeigt eine weitere AC/DC-Konverterschaltung, die je nach Ansteuerung als Hoch- oder als Tiefsetzsteller arbeiten kann, allerdings immer nur in einer Energieflußrichtung. Diese Schaltung könnte durch Weglassen der eingangsseitigen Gleichrichterbrücke ohne weiteres als DC/DC-Tiefsetzsteller ausgeführt werden. Jedoch hat der Wandler im abwärtsstellenden Betrieb auf der Ausgangsseite hinter der Gleichrichtung einen nicht stetigen HF-Ausgangsstrom, dessen Wechselstromanteil den Ausgangskondensator streßt. Diese Anordnung ist daher zwar für große Ausgangsleistungen geeignet, aber nicht für große Ausgangsströme.

Ausgehend von der DE 195 42 357 A1 und den oben genannten Anforderungen liegt der Erfindung die Aufgabe zugrunde, einen potentialgetrennten bidirektional betreibbaren DC/DC-Konverter sowie einen potentialgetrennten DC/DC-Tiefsetzsteller anzugeben, die jeweils mit besonders geringem Aufwand realisierbar sein sollen.

Diese Aufgabe wird durch einen DC/DC-Konverter mit den im Anspruch 1 angegebenen Merkmalen gelöst, bzw. durch einen DC/DC-Tiefsetzsteller mit den im Anspruch 11 angegebenen Merkmalen. Vorteilhafte Ausgestaltungen des DC/DC-Konverters sind in abhängigen Ansprüchen angegeben.

Die erfindungsgemäße Schaltung in Verbindung mit einer - auch in Flachbauweise ausführbaren magnetischen Verbundeinheit - ermöglicht die Herstellung besonders kompakter Konverter.

Eine weitere Erläuterung der Erfindung erfolgt nachstehend anhand der in Zeichnungsfiguren dargestellten Ausführungsbeispielen.

Es zeigen:
- Fig. 1: Prinzipschaltbild eines bidirektionalen DC/DC-Konverters,
- Fig. 2: Stromverläufe im Hochsetzstellerbetrieb,
- Fig. 3: Stromverläufe im Tiefsetzstellerbetrieb,
- Fig. 4: Schaltungsanordnung im Fall der Anwendung des DC/DC-Konverters in einem Elektrofahrzeug mit Brennstoffzellenbatterie,
- Fig. 5: Prinzipschaltbild eines Tiefsetzstellers,
- Fig. 6: erste Ausführungsvariante einer magnetischen Verbundeinheit und
- Fig. 7: zweite Ausführungsvariante einer magnetischen Verbundeinheit.

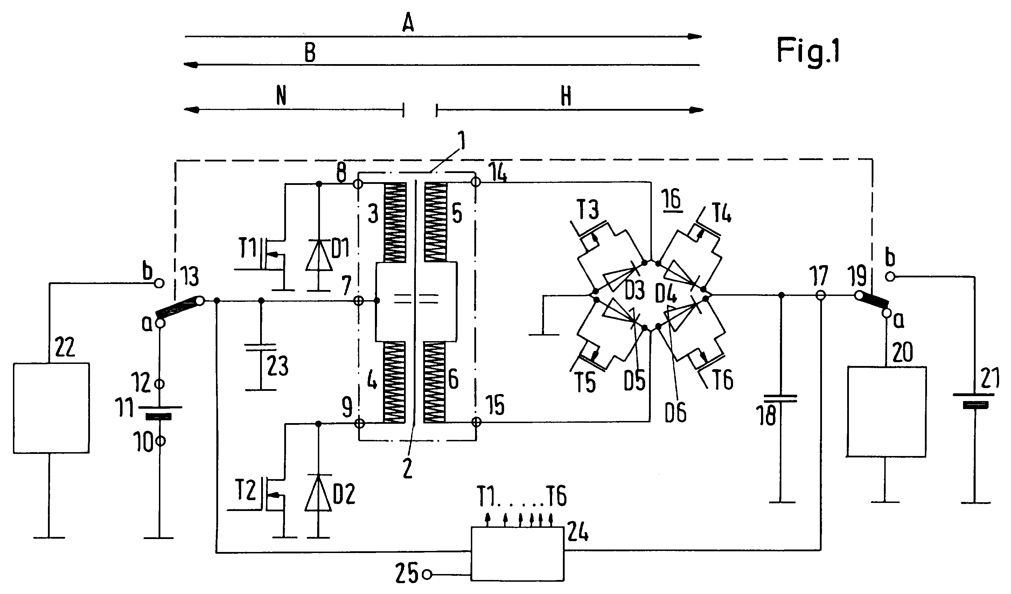

Fig. 1 zeigt einen DC/DC-Konverter mit einer magnetischen Verbundeinheit 1, die auf einem Eisenkern 2 eine erste und eine zweite niedervoltseitige Wicklung 3, 4 sowie eine erste und eine zweite hochvoltseitige Wicklung 5, 6 aufweist. Die Niedervoltseite der Schaltungsanordnung ist mit N bezeichnet, die Hochvoltseite mit H. Die niedervoltseitigen Wicklungen 3, 4 sind elektrisch in Reihe geschaltet, wobei die Verbindungsstelle als Mittelanzapfung 7 herausgeführt ist. Auf der Hochvoltseite sind die Wicklungen 5, 6 ebenfalls in Reihe geschaltet, jedoch ohne Herausführung der Verbindungsstelle.

Zur Bildung eines im Gegentakt arbeitenden Hochsetzstellers sind die äußeren Anschlüsse 8, 9 der niedervoltseitigen Wicklungen 3, 4 jeweils über Leistungstransistoren T1, T2 mit einem ersten Pol 10 einer Niedervolt-Energiequelle 11 verbindbar. Die Mittelanzapfung 7 ist über einen ersten Umschalter 13 in dessen Stellung a mit dem zweiten Pol 12 der Niedervolt-Spannungsquelle 11 verbindbar. Die Anschlüsse 14, 15 der hochvoltseitigen Wicklungen 5, 6 sind mit einer Vollbrückenschaltung 16 mit den Gleichrichterdioden D3, D4, D5, D6 verbunden. Zum Gleichspannungsanschluß 17 der Vollbrückenschaltung 16 ist ein Glättungskondensator 18 parallelgeschaltet. Im Hochstellerbetrieb ist über einen zweiten Umschalter 19 in dessen Stellung a an den Gleichspannungsanschluß 17 eine hochvoltseitige Last 20 anschließbar.

Um eine zusätzliche Tiefsetzstellerfunktion zu ermöglichen, sind zur Bildung einer zweiten Gegentaktwandlerfunktion auf der Hochvoltseite in der Vollbrückenschaltung 16 den Dioden D3 bis D6 jeweils Transistoren T3 bis T6 parallelgeschaltet, wobei eine Einspeisung elektrischer Energie über den zweiten Umschalter 19 in dessen Stellung b aus einer Hochvolt-Energiequelle 21 erfolgt. Auf der Niedervoltseite sind für den Tiefsetzstellerbetrieb zu den Transistoren T1, T2 jeweils Dioden D1, D2 parallelgeschaltet. Geeignet sind dafür insbesondere Schottky-Dioden. Die Mittelanzapfung 7 ist mittels des ersten Umschalters 13 in seiner Stellung b im Tiefsetzstellerbetrieb mit einer niedervoltseitigen Last 22 verbunden. Ein auf der Niedervoltseite N angeordneter, zwischen die Mittelanzapfung 7 und Masse geschalteter Kondensator 25 ist vorgesehen zur Aufnahme von höherfrequenten Wechselströmen. Er soll somit eine konstante Lastspannung bewirken. Wenn die Last, beispielsweise eine Batterie, selbst im Stande ist diese Aufgabe zu übernehmen, kann der Kondensator 26 entfallen. Einer Steuereinrichtung 24 sind jeweils die hoch und niederspannungsseitigen Spannungen sowie Steuersignale über einen Steuereingang 25 zugeführt. Die Steuereinrichtung 24 bewirkt eine Umschaltung der Umschalter 13, 19 sowie eine Ansteuerung der Transistoren T1 bis T6. Die Energieflußrichtung im Hochsetzstellerbetrieb ist mit A bezeichnet, die Energieflußrichtung im Tiefsetzstellerbetrieb mit B.

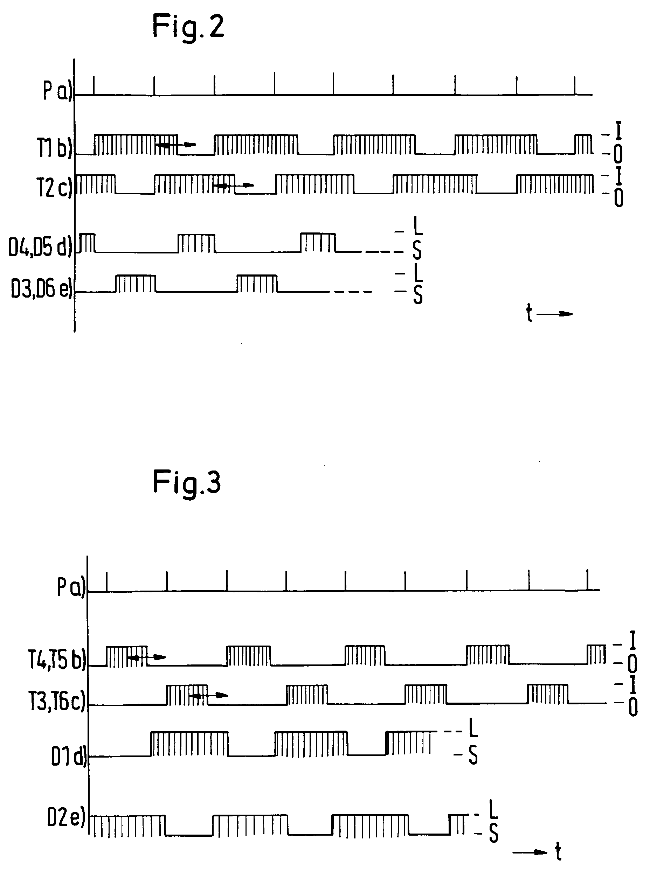

Zur Erläuterung der Arbeitsweise des bidirektionalen Konverters zeigt Fig. 2 zugehörige Stromverläufe im Hochsetzbetrieb und Fig. 3 Stromverläufe im Tiefsetzbetrieb.

In Fig. 2 sind in Zeile a Taktimpulse P dargestellt, in Zeile b zugehörige, bezüglich der Dauer variable Einschaltzustände I bzw. Ausschaltzustände 0 des Transistors T1 im Verlauf der Zeit t dargestellt. Zeile c zeigt die entsprechenden Einschaltdauern des zweiten Transistors T2. Zeile d zeigt die zugehörige Dauer der Leitendzustände L bzw. Sperrzustände S der Dioden D4, D5 und Zeile e der Dioden D3, D6.

Aus Fig. 2 ist zu entnehmen, daß sich im Hochsetzstellerbetrieb die Einschaltzeiten der Transistoren T1, T2 im Gegentaktbetrieb überlappen. Wie aus Fig. 3 ersichtlich ist, überlappen sich dagegen die Einschaltzeiten der Transistoren T4 und T5 nicht mit den Einschaltzeiten der Transistoren T3 und T5. Fig. 3 zeigt ähnlich wie Fig. 2 in Zeile a die Taktimpulse P, in den Zeilen b bzw. c die steuerbaren Einschaltdauern der Transistoren T4, T5 bzw. T3, T6 und in den Zeilen d und e die zugehörigen Leitendphasen der Dioden D1 und D2.

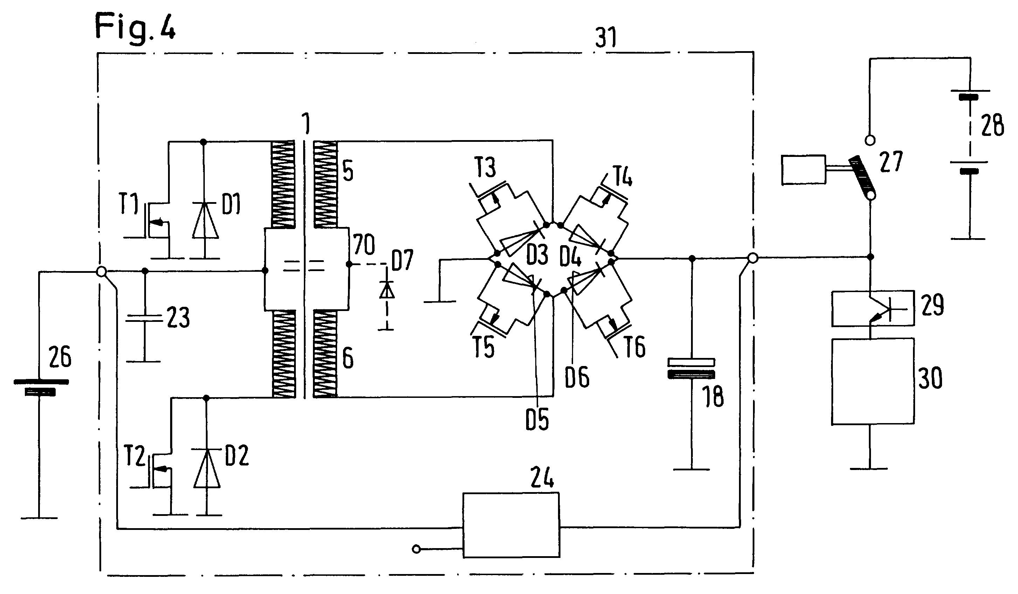

Während Fig. 1 eine allgemein gültige Darstellung des bidirektionalen DC/DC-Konverters mit hoch- bzw. niedervoltseitigen Umschaltmöglichkeiten zwischen Lasten und Energiequellen zeigt, ist in Fig. 4 der bidirektionale DC/DC-Konverter in einem Anwendungsfall dargestellt, in dem der Konverter in einem Elektrofahrzeug mit Brennstoffzellenspeisung eingesetzt ist. Dabei ist eine Brennstoffzelle unterstellt, die für den Startvorgang eine Hilfsenergie benötigt. In diesem Sonderfall ist auf der Niedervoltseite eine Starterbatterie 26, z.B. eine 12V-Batterie vorhanden, die im Hochsetzbetrieb als Energiequelle und im Tiefsetzbetrieb als Last wirkt. Daher entfällt der niedervoltseitige Umschalter 13 (Fig. 1). Auch der hochvoltseitige Umschalter 19 (Fig. 1) entfällt. Statt dessen ist in der Anordnung gemäß Fig. 4 ein Schalter 27 vorhanden, mit dessen Hilfe eine Brennstoffzellenbatterie 28 an den DC/DC-Konverter 31 anschließbar ist. Die Brennstoffzellenbatterie 28 wirkt im Hochsetzbetrieb als Last und im Tiefsetzbetrieb als Energiequelle. Das bedeutet, daß nach dem Start der Brennstoffzellenbatterie 28 eine Nachladung der Starterbatterie 26 erfolgen kann. Die Brennstoffzellenbatterie 28 arbeitet z.B. in einem Spannungsbereich von 190 bis 320 Volt. Als Hauptlast ist an die Brennstoffzellenbatterie 28 mittels eines Lastschalters 29 ein Fahrzeugantrieb 30 zuschaltbar.

Eine Umsteuerung zwischen Hochsetzsteller- und Tiefsetzstellerbetrieb erfolgt im Fall der Anordnung gemäß Fig. 4 allein durch entsprechende Ansteuerung der Transistoren T1 bis T6 durch die Steuereinrichtung 24 des Konverters 31.

In Fig. 4 ist als mögliche Ausgestaltung der Erfindung mit gestrichelten Linien eine Diode D7 zwischen die Verbindungsstelle der hochvoltseitigen Wicklungen 5, 6 und Masse geschaltet, die somit eine halbleitende Verbindung zum Minuspol der Hochvoltseite darstellt. Damit wird ein Anfahrbetrieb ermöglicht, in dem - während noch keine Last (28, 30) zugeschaltet ist - der Glättungskondensator 18 mit kleiner Konverterleistung auf Arbeitsspannungsniveau aufgeladen wird. Eine für diesen Anfahrbetrieb geignete Art der Ansteuerung der Transistoren T1, T2 ist in der DE 195 42 357 A1 als Betriebsweise der dort in Fig. 11 dargestellten Schaltung beschrieben.

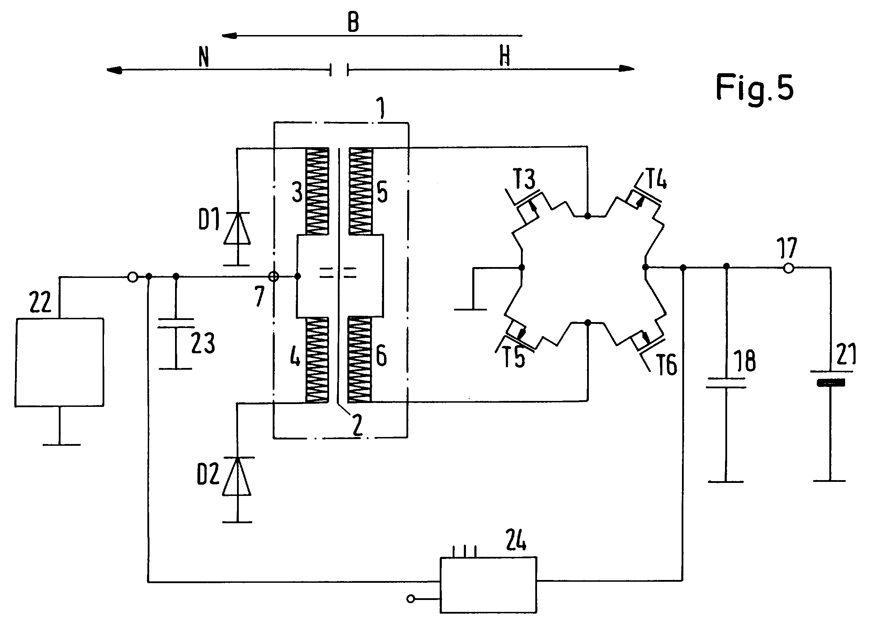

Fig. 5 zeigt eine mögliche Ausführung des Konverters in einem Anwendungsfall, in dem lediglich eine Tiefsetzstellerfunktion benötigt wird. Die dann in der Schaltungsanordnung benötigten Komponenten sind mit denselben Bezugszeichen wie die Komponenten der Anordnung gemäß Fig. 1 bezeichnet, so daß sich eine Wiederholung der Beschreibung erübrigt.

Der Konverter verhält sich wie der bekannte Gegentakt-Flußwandler, ist aber mit geringererem Bauelemente-Aufwand realisierbar.

In den Figuren 1, 4 und 5 dargestellten Konverteranordnungen kann vorteilhaft jede der in der DE 195 42 357 A1 beschriebenen und in Zeichnungsfiguren dargestellten magnetischen Verbundeinheiten eingesetzt werden.

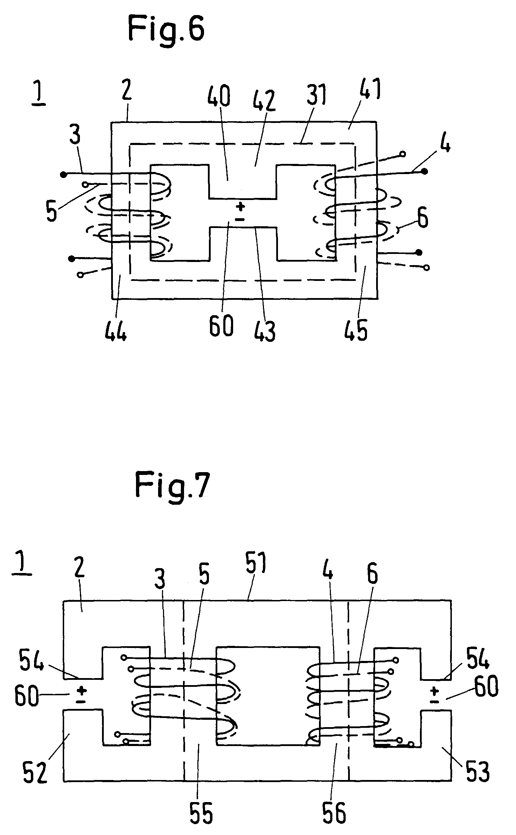

Zwei dieser bekannten magnetischen Verbundeinheiten sind in den Figuren 6 und 7 dargestellt.

Fig. 6 zeigt eine magnetische Verbundeinheit 1, die als Eisenkern 2 einen dreischenkligen Kern 41 aufweist, dessen mittlerer Schenkel 42 einen Luftspalt 43 hat, und dessen äußere Schenkel 44, 45 jeweils eine niedervoltseitige Wicklung 3 bzw. 4 und eine hochvoltseitige Wicklung 5 bzw. 6 tragen. Mittels eines Permanentmagneten 60 im Bereich des Luftspalts 43 ist ein luftspaltbehafteter magnetischer Kreis 40 mit permanentmagnetischer Vorspannung gebildet. Mit 31 ist ein - mit gestrichelter Linie eingezeichneter - luftspaltloser magnetischer Kreis bezeichnet.

Fig. 7 zeigt eine Ausführungsvariante der magnetischen Verbundeinheit 1, die einen vierschenkligen Kern 51 aufweist. Die äußeren Schenkel 52, 53 sind jeweils mit einem Luftspalt 54 versehen. Die inneren Schenkel 55, 56 tragen jeweils eine niedervoltseitige Wicklung 3 bzw. 4 und eine hochvoltseitige Wicklung 5 bzw. 6.

## Patentansprüche

1. DC/DC-Konverter, der abwechselnd in einer ersten Energieflußrichtung (A) als Hochsetzsteller und in einer zweiten Energieflußrichtung (B) als Tiefsetzsteller betreibbar ist, und der enthält:
a) eine magnetische Verbundeinheit (1), die
a1) einen Eisenkern (2) mit einem luftspaltbehafteten magnetischen Kreis (31) zur Realisierung einer Energiespeicherfunktion und parallel dazu einen luftspaltlosen magnetischen Kreis (40) zur Realisierung einer Transformatorfunktion aufweist,
a2) zwei in Reihe geschaltete niedervoltseitige Wicklungen (3, 4) hat, deren Verbindungsstelle als Mittelanzapfung (7) herausgeführt ist,
a3) zwei in Reihe geschaltete hochvoltseitige Wicklungen (5, 6) hat, wobei
a4) jeweils eine niedervoltseitige Wicklung (3 oder 4) zusammen mit einer hochvoltseitigen Wicklung (5 oder 6) auf einem luftspaltlosen Schenkel des Kerns (2) angeordnet ist,
b) erste Schalt- (T1, T2), Gleichrichtungs- (D3, D4, D5, D6), Glättungs- (18) und Steuerungs-Mittel (24) für den Hochsetzstellerbetrieb,
c) zweite Schalt- (T3, T4, T5, T6), Gleichrichtungs- (D1, D2), Glättungs- (23) und Steuerungs-Mittel (24) für den Tiefsetzstellerbetrieb, und
d) Mittel (13, 19, 24) zur Steuerung der Energieflußrichtung (A, B).

2. DC/DC-Konverter nach Anspruch 1, dadurch gekennzeichnet, daß die magnetische Verbundeinheit (1) als Eisenkern (2) einen dreischenkligen Kern (41) aufweist, dessen mittlerer Schenkel (42) einen Luftspalt (43) hat, und dessen äußere Schenkel (44, 45) jeweils eine niedervoltseitige Wicklung (3 bzw. 4) und eine hochvoltseitige Wicklung (5 bzw. 6) tragen.

3. DC/DC-Konverter nach Anspruch 1, dadurch gekennzeichnet, daß die magnetische Verbundeinheit (1) als Eisenkern (2) einen vierschenkligen Kern (51) aufweist, dessen äußere Schenkel (52, 53) jeweils mit einem Luftspalt (54) versehen sind, und dessen innere Schenkel (55, 56) jeweils eine niedervoltseitige Wicklung (3 bzw. 4) und eine hochvoltseitige Wicklung (5 bzw. 6) tragen.

4. DC/DC-Konverter nach einem der Ansprüche 2 oder 3, dadurch gekennzeichnet, daß durch wenigstens einen Permanentmagneten (60) wenigstens ein luftspaltbehafteter magnetischer Kreis (40) mit permanentmagnetischer Vorspannung gebildet ist.

5. DC/DC-Konverter nach einem der vorstehenden Ansprüche, dadurch gekennzeichnet, daß als Schaltmittel (T1 bis T6) Leistungstransistoren verwendet sind.

6. DC/DC-Konverter nach einem der vorstehenden Ansprüche, dadurch gekennzeichnet, daß als Gleichrichtungsmittel (D1 bis D6) Halbleiterdioden, insbesondere Schottky-Dioden eingesetzt sind.

7. DC/DC-Konverter nach einem der vorstehenden Ansprüche, dadurch gekennzeichnet, daß als Glättungsmittel (18, 23) Kondensatoren vorhanden sind.

8. DC/DC-Konverter nach einem der vorstehenden Ansprüche, dadurch gekennzeichnet, daß als Mittel (13, 19, 24) zur Steuerung der Energieflußrichtung (A, B) Umschalter (13, 19) und/oder elektronische Steuerungen (24) zur Ansteuerung der Schaltmittel (T1 bis T6, 13, 19) vorhanden sind.

9. DC/DC-Konverter nach einem der vorstehenden Ansprüche, dadurch gekennzeichnet, daß der Konverter dafür eingerichtet ist, im Hoch- und Tiefsetzstellerbetrieb nach dem Gegentaktwandlerprinzip zu arbeiten, wobei auf der Hochvoltseite (H) eine Dioden-Vollbrücke (D3, D4, D5, D6) mit jeweils zu den einzelnen Dioden (D3, D4, D5, D6) parallelgeschalteten Leistungstransistoren (T3, T4, T5, T6) vorhanden ist.

10. DC/DC-Konverter nach einem der vorstehenden Ansprüche, dadurch gekennzeichnet, daß an einer Verbindungsstelle (70) der in Reihe geschalteten hochvoltseitigen Wicklungen (5,6) die Kathode einer Diode (D7) angeschlossen ist, deren Anode mit dem Minuspol einer in den Konverter einspeisenden Energiequelle (26) verbunden ist.

11. DC/DC-Tiefsetzsteller, der enthält:
a) eine magnetische Verbundeinheit (1), die
a1) einen Eisenkern (2) mit einem luftspaltbehafteten magnetischen Kreis (31) zur Realisierung einer Energiespeicherfunktion und parallel dazu einen luftspaltlosen magnetischen Kreis (40) zur Realisierung einer Transformatorfunktion aufweist,
a2) zwei in Reihe geschaltete niedervoltseitige Wicklungen (3, 4) hat, deren Verbindungsstelle als Mittelanzapfung (7) herausgeführt ist,
a3) zwei in Reihe geschaltete hochvoltseitige Wicklungen (5, 6) hat, wobei
a4) jeweils eine niedervoltseitige Wicklung (3 oder 4) zusammen mit einer hochvoltseitigen Wicklung (5 oder 6) auf einem luftspaltlosen Schenkel des Kerns (2) angeordnet ist,
b) auf der Hochvoltseite (H) der Verbundeinheit (1) eine Leistungstransistor-Vollbrücke (T3, T4, T5, T6),
c) auf der Niedervoltseite (N) der Verbundeinheit (1) Gleichrichterdioden (D1, D2) und einen Kondensator (23), und
d) eine Steuereinrichtung (24) zur Ansteuerung der Leistungstransistor-Vollbrücke (T3, T4, T5, T6) im Gegentaktbetrieb.
